(19) Europäisches Patentamt / European Patent Office / Office européen des brevets

(11) **EP 3 150 864 B1**

(12) **EUROPÄISCHE PATENTSCHRIFT**

(45) Veröffentlichungstag und Bekanntmachung des Hinweises auf die Patenterteilung:
**22.04.2020   Patentblatt 2020/17**

(51) Int Cl.:
*F15B 15/28* (2006.01)          *G01D 5/48* (2006.01)
*G01S 13/88* (2006.01)

(21) Anmeldenummer: **16185269.4**

(22) Anmeldetag: **23.08.2016**

(54) **VERFAHREN UND ZYLINDER MIT EINER VORRICHTUNG ZUR POSITIONSBESTIMMUNG DES ZYLINDERKOLBENS**

METHOD AND CYLINDER WITH A DEVICE FOR DETERMINING THE POSITION OF THE CYLINDER PISTON

PROCEDE ET CYLINDRE AVEC UN DISPOSITIF DE DETERMINATION DE POSITION DU PISTON DU CYLINDRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2015   DE 102015012799**

(43) Veröffentlichungstag der Anmeldung:
**05.04.2017   Patentblatt 2017/14**

(73) Patentinhaber: **Liebherr-Elektronik GmbH**
**88131 Lindau (DE)**

(72) Erfinder:
- **Leutenegger, Paolo**
  **88284 Mochenwangen (DE)**
- **Scheidt, Dr. Michael**
  **8623 Wetzikon (CH)**
- **Braun, Sebastian**
  **88131 Lindau (DE)**
- **Kipp, Michael**
  **88138 Sigmarszell (DE)**

(74) Vertreter: **Laufhütte, Dieter**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
| | |
|---|---|
| **EP-A1- 1 752 792** | **EP-A1- 2 876 308** |
| **EP-B1- 1 040 316** | **WO-A1-2011/080200** |
| **CN-A- 1 102 253** | **DE-A1-102008 061 227** |
| **DE-A1-102008 064 259** | **DE-A1-102009 055 363** |
| **DE-A1-102013 018 808** | |

EP 3 150 864 B1

**Beschreibung**

Die Erfindung betrifft einen Zylinder mit einer Vorrichtung zur Positionsbestimmung des Zylinderkolbens des Zylinders und ein Verfahren zur Positionsbestimmung des Zylinderkolbens, insbesondere eines Zylinderkolbens einer hydraulischen oder pneumatischen Kolbenzylindereinheit.

Eine möglichst exakte und schnelle Positionsbestimmung eines Zylinderkolbens wird für eine Reihe technischer Anwendungen vorausgesetzt. Insbesondere wird für die automatisierte Ansteuerung einer Kolbenzylindereinheit die exakte Kolbenposition als Regelgröße benötigt. Zudem kann die Positionsbestimmung zur Erfüllung der Betriebssicherheit beitragen, da der Einlass des Hydraulikmediums, insbesondere der Hydraulikflüssigkeit, in Extrempositionen des Zylinderkolbens exakt gesteuert und folglich rechtzeitig gestoppt werden kann.

Vor allem ist eine präzise Positionsbestimmung bei der automatischen Ansteuerung der Kolbenzylindereinheit bei Baumaschinen bzw. Hubgeräten von Bedeutung. Die Kolbenzylindereinheit betätigt in üblicherweise das Arbeitsgerät der Baumaschine bzw. des Hubgerätes. Eine hinreichend genaue Positionsbestimmung der Kolbenzylindereinheit erhöht die Qualität der Ansteuerung und ist daher dringend erforderlich. Eine von mehreren im Stand der Technik bekannten Techniken zur Bestimmung der aktuellen Position eines Zylinderkolbens ist die Nutzung von speziell angeordneten Seilzugpotentiometern.

Ein alternatives Verfahren zur Längenausdehnungsmessung der Hydraulikzylinder arbeitet nach einem magnetostriktiven Prinzip. Hierbei muss jedoch für die Integration des Messelements in den Zylinder die Kolbenstange über die gesamte Hublänge durchgebohrt werden, was den Zylinder mechanisch schwächt und hohe Integrationskosten verursacht. Bei großen Zylindern kann diese Einbauvariante nicht mehr eingesetzt werden. Ebenso stellt die benötigte Kabelführung der verwendeten Messelektronik innerhalb des Zylinders eine herausfordernde Aufgabe dar.

Aus der DE 10 2005 029 494 A1 ist ein weiteres Verfahren zur Positionsbestimmung von Hydraulik- und Pneumatikzylindern bekannt. Die daraus hervorgehende Kolbenzylinderanordnung weist ein Sensorelement auf, das mit einem magnetischen Geberelement in Wechselwirkung steht. Der Kolben übernimmt die Funktion eines Tauchkerns (Geberelement), dessen Position über eine Weg-Sensor-Spule (Sensorelement) erfasst und durch eine Auswerteelektronik bestimmt wird. Die Weg-Sensor-Spule befindet sich in der kolbenstangenabgewandten Seite des Zylinderrohrs.

Die DE 195 37 877 A1 offenbart eine Vorrichtung zum Bestimmen einer Kolbenposition in einem Zylinder unter Verwendung von elektromagnetischen Wellen, bei der mit Hilfe einer skalaren Auswertung auf die Position des Kolbens in dem Zylinder geschlossen wird.

Ein weiteres Messprinzip ist aus der DE 10 2011 088 381 A1 bekannt. Das darin angewandte Resonanzmessverfahren bestimmt auf Grundlage der gebildeten Kapazität und der Induktivität der Kolbenzylinderanordnung die aktuelle Position des Kolbens. Als längenveränderliche Variable ist im Wesentlichen die gemessene Induktivität ausschlaggebend. Nachteilig an dem genannten Messverfahren ist jedoch, dass sporadisch auftretende Kurzschlusseffekte zwischen Kolben und Mantelfläche, beispielsweise durch Verunreinigungen innerhalb der Kolbenzylindereinheit, die Messgenauigkeit verfälschen können. Damit besteht ein Restrisiko beim Betrieb derartiger Zylindereinheiten.

Zylinder mit Vorrichtung zur Positionsbestimmung des Zylinderkolbens des Zylinders dieser Art sind ebenfalls aus den Druckschriften DE 102008061227, DE 102013018808, DE 102008064259 und DE 102009055363 bereits bekannt.

Zudem sind bei der Messung der Zylinderimpedanz Störeffekte vorhanden, da externe instabile Impedanzbeiträge von der nutzbaren Zylinderimpedanz nicht getrennt werden können. Solche Störbeiträge sind unter anderem die externen Ankopplungsmittel, die zur Messung der Impedanz notwendig sind. Darunter leidet die genaue Positionsmessung, insbesondere bei nicht konstanten Arbeitsbedingungen wie schwankende Temperaturen, Druck und mechanische Belastung des Zylinders.

Ziel der vorliegenden Erfindung ist es daher, dem Fachmann ein alternatives bzw. verbessertes und verlässlicheres Messverfahren sowie eine hierzu entsprechende Messvorrichtung zur Positionsbestimmung eines Zylinderkolbens an die Hand zu geben.

Diese Aufgabe wird durch die Vorrichtung mit den Merkmalen nach Anspruch 1 gelöst. Vorteilhafte Ausführungsformen der Vorrichtung finden sich in den abhängigen Ansprüchen.

Demnach umfasst die Vorrichtung zur Positionsbestimmung eines in einem Zylinderrohr befindlichen Zylinderkolbens einen Port zum Einkoppeln bzw. zum Auskoppeln eines elektrischen Signals in das Innere des Zylinderrohrs, wobei ein in das Innere des Zylinderrohrs eingekoppeltes Signal mit dem Zylinderkolben interagiert. Die Vorrichtung ist durch eine Einheit zum Bestimmen der Position des Zylinderkolbens gekennzeichnet, die mit dem Port verbunden und dazu ausgelegt ist, mit Hilfe einer vektoriellen Messung eines aus dem Zylinderrohr ausgekoppelten Signals die Position des Zylinderkolbens in dem Zylinderrohr zu bestimmen.

Durch das Vorsehen des Ports ist es möglich eine Messstrecke bestehend aus Zylinderrohr und Zylinderkolben zu vermessen. Dabei wird zuerst ein Anregungssignal in das Innere des Zylinders über den Port eingekoppelt und nach einem Ausbreiten des Signals im Inneren des Zylinderrohrs das Signal aus dem Inneren des Zylinderrohrs über den Port ausgekoppelt und mit Hilfe einer vektoriellen Messung bestimmt. Bei der vektoriellen Messung wird neben dem Amplitudenwert die Phase des Signals bestimmt.

Die vektorielle Messung des Signals ermöglicht eine genauere und schnellere Bestimmung der Position des Kolbens in dem Zylinderrohr.

Der Port beschreibt hierbei jede Art von Ankopplungselement, das ein elektrisches Signal induktiv, kapazitiv oder ohmsch auf eine leitfähige Struktur übertragen kann.

Ein erster Port zum Einkoppeln und ein zweiter Port zum Auskoppeln eines elektrischen Signals aus dem Zylinderrohr ist vorgesehen, wobei die Einheit zum Bestimmen der Position des Zylinderkolbens dazu ausgelegt ist, mit Hilfe einer Mehrtormessung mindestens einen Transmissionsfaktor der Ports zu erfassen und auf Grundlage des mindestens einen erfassten Transmissionsfaktors die Zylinderkolbenposition zu bestimmen. Innovativ ist hierbei die Betrachtung des Zylinders als Mehrtorsystem und die Erkenntnis, dass über den Transmissionsfaktor eine Position des Kolbens in dem Zylinderrohr möglich ist.

Dies vereinfacht und beschleunigt die Messung der Kolbenposition und ermöglicht zudem die Umsetzung mit Hilfe von auf dem Markt einfach erhältlichen Bauteilen. So kann beispielsweise die Einheit zum Bestimmen der Position des Zylinderkolbens einen handelsüblichen Netzwerkanalysator umfassen.

Nach einer weiteren vorteilhaften Modifikation der Erfindung umfasst die Vorrichtung zur Positionsbestimmung eines Zylinderkolbens eine Kolbenstange, die an einem ihrer Enden mit dem Zylinderkolben in Verbindung steht, ein Kolbenstangenlager, das an einem Abschnitt der Kolbenstange angeordnet ist und den ersten Port zum Einkoppeln eines elektrischen Signals in das Innere des Zylinderrohrs und/oder auf die Kolbenstange, und den zweiten Port zum Auskoppeln eines elektrischen Signals aus dem Inneren des Zylinderrohrs und/oder von der Kolbenstange aufweist. Die Einheit ist zum Bestimmen der Position des Zylinderkolbens dazu ausgelegt mit Hilfe einer Mehrtormessung mindestens einen Transmissionsfaktor der Ports zu erfassen und auf Grundlage des mindestens einen erfassten Transmissionsfaktors die Zylinderkolbenposition zu bestimmen.

Der Zylinderkolben, dessen Position durch die erfindungsgemäße Vorrichtung zu bestimmen ist, ist also an einem Ende der Kolbenstange angeordnet. Das Kolbenstangenlager dient typischerweise zur Lagerung der Kolbenstange und schließt einen Zylindermantel an einer Seite ab. Der Zylinderkolben ist dabei verschiebbar in dem Zylindermantel aufgenommen. In der Regel ist das Kolbenstangenlager außerhalb eines Zylindermantels oder eines Zylinderrohrs angeordnet, wohingegen der Zylinderkolben bewegbar innerhalb des Zylindermantels angeordnet ist. In einer zur Längsrichtung der Kolbenstange verlaufenden Querschnittsansicht besitzt der Zylinderkolben eine größere Ausdehnung als die Kolbenstange, sodass ein möglichst genaues Abschließen mit der Innenfläche eines Zylindermantels erreicht wird.

Die Oberflächen der Zylinderkolbeneinheit, d. h. des kompletten Zylinders können dabei auch mit elektrisch nicht leitenden Materialien beschichtet sein, allerdings muss das Bulkmaterial elektrisch leitfähig sein, damit überhaupt ein Strom fließen kann. Dafür ist auch nur eine leitende Schicht ausreichend, wie es bei einem Kunststoffzylinder mit dünner Metallbeschichtung der Fall wäre.

Die Erfindung basiert unter anderem auf der grundlegenden Erkenntnis, dass die Positionsinformation des Zylinderkolbens aus einer vektoriellen Messung der Streuparameter eines Zylinders erfolgen kann. Der erste Port stellt dabei ein erstes Tor und der zweite Port stellt dabei ein zweites Tor dar, das mit der Kolbenstange bzw. dem Kolbenstangenlager interagiert. Es ist jedoch auch möglich lediglich einen Port vorzusehen, der in Signalabgaberichtung als ein erster Port und in Signalaufnahmerichtung als ein zweiter Port angesehen werden kann. Jedoch ist die Ausführung mit zwei physikalisch voneinander getrennten Ports von Vorteil, da bessere Messergebnisse erzielt werden können.

Der Hohlraum zwischen Kolbenstange und Zylinderrohr dient als Ausbreitungsraum für elektromagnetische Wellen, die für die Messung der Kolbenposition verwendet werden. Die elektrisch leitenden Teile des Zylinders stellen Randbedingungen für elektromagnetische Wellen dar.

So dient der Transmissionsfaktor $S_{21}$ oder $S_{12}$ zwischen dem ersten und dem zweiten Port als Grundlage zur Bestimmung der Zylinderimpedanz, womit dann auf die genaue Position des Kolbens zurückgeschlossen werden kann. Vorteilhaft bei Positionsbestimmung auf Grundlage von mindestens einem Streuparameter ist der Umstand, dass die Impedanzbeiträge von Ankopplungselementen, wie beispielsweise den Ports, durch eine geschickte Wahl der Messfrequenz unterdrückt werden können. Dadurch ergibt sich eine genauere Positionsbestimmung des Kolbens. Zudem erzielt die vorgestellte Erfindung genauere Ergebnisse bei nicht konstanten Arbeitsbedingungen, wie schwankenden Temperaturen, Druck und mechanischen Belastungen des Zylinders.

Bei einem Zweitor ist dies der Transmissionsfaktor $S_{12}$ oder $S_{21}$, die in einer vorteilhaften Variation der Erfindung identisch sind. Demnach wäre das mit dem ersten Port und dem zweiten Port gebildete Zweitor Übertragungssymmetrisch.

Vorzugsweise sind der erste Port und der zweite Port bezüglich einer Hubbewegung des Zylinderkolbens und der Kolbenstange ortsfest angeordnet. Besonders vorteilhaft ist eine Anordnung an oder in dem Kolbenstangenlager. Insbesondere können die Ports dabei fest mit einem Zylindermantel verbunden sein, in dem der Zylinderkolben aufgenommen ist. Die Position des oder der Ports bezüglich des Zylinderrohrs ändert sich nicht. Die Einheit zum Bestimmen der Position des Zylinderkolbens ist dann dazu ausgelegt, die Zylinderkolbenposition in Bezug auf die ortsfest angeordneten Ports zu bestimmen.

Durch eine Variation der Kolbenposition ändert sich die Impedanz der Messstrecke zwischen Zylinderkolben und Zylinderrohr. Dadurch lassen sich an den Ports Signalveränderungen messen, die in einem direkten Zusammenhang mit der Hubvariation des Kolbens stehen.

Nach einer weiteren vorteilhaften Modifikation der Erfindung ist der erste Port und/oder der zweite Port ein Ankopplungselement, das eine Übertragung eines elektrischen Signals auf die Kolbenstange bzw. von der Kolbenstange kapazitiv, induktiv und/oder ohmsch ermöglicht.

Die Ports umfassen elektrische Anschlüsse (Elektroden), die in eine Wirkverbindung mit der Kolbenstange stehen, sodass ein Port jeweils einem Tor der Mehrtormessung entspricht. Der zweite zum Tor gehörende Anschluss eines Ports wird dabei durch ein gemeinsames Masseniveau dargestellt. Geeignete elektrische Anschlüsse sind alle elektrischen Verbindungen, die eine Wechselwirkung zwischen einer externen Ankopplung und einem positionsvariablen Wellenleiter (hier in Form der Kolbenstange) ermöglichen.

Es ist möglich, die elektrischen Anschlüsse direkt in dem Kolbenstangenlager zu integrieren, um eine Signalübertragung auf die Kolbenstange des Zylinders induktiv, kapazitiv oder. ohmsch zu ermöglichen. Von Vorteil ist eine kapazitive oder induktive Anbindung, da so die Interaktion mit der Kolbenstange verschleißfrei implementiert ist, ohne dass die durch die Lebensdauer bedingten Veränderungen einer Kontaktierung zur Verschlechterung der Signalübertragung führt. Eine direkte Kontaktierung der Kolbenstange mit den Ports ist aber ebenfalls möglich.

So kann in einer vorteilhaften Modifikation der Erfindung der erste Port (4) und/oder der zweite Port (5) mindestens einen eine Elektrode umfassenden elektrischen Anschluss aufweisen. Diese Elektrode steht dann typischerweise mit der Kolbenstange in Verbindung und sorgt für eine bidirektionale Signalübertragung elektrischer Signale.

Vorzugsweise ist die Einheit zum Bestimmen der Position des Zylinderkolbens der Vorrichtung dazu ausgelegt, die Mehrtormessung der Ports zur Bestimmung des mindestens einen Transmissionsfaktors an mindestens zwei voneinander verschiedenen Messfrequenzen oder Messfrequenzbereichen durchzuführen. Bei lediglich zwei Ports ist die Mehrtormessung eine Zweitormessung.

Eine bestimmte Frequenz, die bei der Bestimmung der Streuparameter verwendet wird, führt zu einer Positionsinformation des Zylinderkolbens, die bis auf ein Vielfaches der Größe $\lambda/2$ eindeutig ist. Mit Hilfe der Messung des Transmissionsfaktors bei einer weiteren Frequenz kann diese Multiplizität gelöst werden und die Positionsbestimmung besonders verlässlich ausgeführt werden. $\lambda$ definiert hierbei die Wellenlänge und steht im Zusammenhang mit der Frequenz durch das Inverse der Ausbreitungsgeschwindigkeit der elektromagnetischen Welle im Medium.

Gemäß einer weiteren Fortbildung der Erfindung umfasst die Vorrichtung einen dritten Port zur Signalübertragung eines elektrischen Signals, der mit den Kolbenstangen interagiert. Das Vorsehen von mehreren Ports dient zur Erhöhung der Verlässlichkeit der zu bestimmenden Zylinderkolbenposition. Die Anzahl der Ports ist demgemäß nicht auf zwei begrenzt, sondern kann eine beliebig große Zahl annehmen. Dabei ist weiterhin von Vorteil, wenn ein Transmissionsfaktor $S_{i,j}$ mit $i \neq j$, also ein Transmissionsfaktor zwischen zwei Toren zur Bestimmung der Zylinderkolbenposition herangezogen wird.

Vorzugsweise sind der zweite Port und/oder der dritte Port durch mindestens einen elektrischen Anschluss in Form von einer Elektrode, die mit der Kolbenstange interagiert oder mit dieser in Kontakt steht gebildet. Da jeder der Ports typischerweise einem Tor der durch die Einheit zum Bestimmen der Position des Zylinderkolbens durchgeführten Mehrtormessung entspricht, wird als der zum Tor gehörende zweite Pol bzw. zweite Elektroden ein gemeinsames Masseniveau genutzt.

Nach einer Fortbildung der Erfindung umfasst das Kolbenstangenlager zwei rinnenförmige Elemente, die in ihrem Querschnitt jeweils in etwa die Grundform eines Halbrings aufweisen, und wobei vorzugsweise jeweils die konkav gewölbte Seiten des rinnenförmigen Elements der Kolbenstange zugewandt ist. Die Kolbenstange ist in den beiden rinnenförmigen Elementen aufgenommen und wird durch diese verschiebbar gelagert. Die rinnenförmigen Elemente können auch als Teilzylindermantelfläche angesehen werden, die durch einen zur Längsrichtung des Zylindermantels parallel verlaufende Schnittebene erhalten werden.

Vorzugsweise nehmen die zwei rinnenförmigen Elemente in ihren konkaven Wölbungen die Kolbenstange auf. Zwischen den einander zugewandten Stirnseiten der zwei rinnenförmigen Elemente ist zudem ein in Längsrichtung der Kolbenstange verlaufender Spalt vorhanden, so dass die beiden rinnenförmigen Elemente nicht miteinander oder nicht direkt miteinander in elektrischer Verbindung stehen.

Hierdurch wird sichergestellt, dass eine direkte elektrisch leitende Verbindung der beiden Ports nur über eine die Kolbenstange verlaufende Verbindung erfolgt und nicht durch andere Elemente wie das Kolbenstangenlager kurzgeschlossen wird.

Gemäß einer bevorzugten Ausführungsform ist der erste Port am oder in einem der zwei rinnenförmigen Elemente angeordnet und der andere Port am oder in dem anderen der zwei rinnenförmigen Elemente angeordnet.

Ferner kann die Einheit zum Bestimmen der Position des Zylinderkolbens dazu ausgelegt sein, unter der vereinfachenden Annahme, dass nur TEM-Mode im Hohlraum zwischen Kolbenstange und Innenwand des Zylinderrohrs berücksichtigt werden, die Position des Zylinderkolbens mit Hilfe der Beziehung

$$e^{i\omega\frac{2L}{c}} = p_3\left(\frac{p_2}{M-p_1}+1\right)$$

zu bestimmen, wobei $\omega$ die Winkelgeschwindigkeit, L die Länge der Kolbenstange im Hohlraum, c die Lichtgeschwindigkeit im Zylindermedium, $p_1$, $p_2$, $p_3$ via Simulation oder Kalibrierung bestimmbare Kalibrierparameter, und M ein an den Ports gemessenes Signal ist. M ist dabei vorzugsweise einer der Transmissionsfaktoren der Ports, bspw. $S_{21}$ oder $S_{12}$. Die Kalibrierparameter $p_1$, $p_2$, $p_3$ können über eine Simulation oder eine Kalibrierung bestimmt werden.

Wie der Gleichung zu entnehmen ist, kann für jede beliebige Frequenz eine eindeutige Positionsinformation bestimmt werden, bis auf vielfachen der Größe $\lambda/2$. Vorteilhafterweise umfasst die Einheit zum Bestimmen der Position des Zylinderkolbens einen vektoriellen Netzwerkanalysator, um den Transmissionsfaktor zu bestimmen.

Vorteilhaft an der erfindungsgemäßen Vorrichtung ist, dass die Positionsinformationen bei jeder beliebigen Messfrequenz gewonnen werden können, also auch bei den Frequenzen, bei denen der Impedanzbeitrag von Ankopplungselementen vernachlässigbar ist.

Darüber hinaus beschreibt die vorliegende Erfindung ein Verfahren zur Positionsbestimmung eines Zylinderkolbens, wobei ein erster Port und ein zweiter Port jeweils zur Signalübertragung eines elektrischen Signals von und auf eine Kolbenstange vorhanden sind. Das Verfahren ist dadurch gekennzeichnet, dass eine Mehrtormessung zum Erhalt von mindestens einem Transmissionsfaktor, vorzugsweise einem der Transmissionsfaktoren $S_{21}$ oder $S_{12}$, der Ports (4, 5) durchgeführt wird, und der mindestens einen erfassten Transmissionsfaktor zum Bestimmen der Zylinderkolbenposition herangezogen wird.

Grundlegend neu gegenüber dem bisherigen Ansatz zur Positionsbestimmung eines Zylinderkolbens ist die veränderte Betrachtungsweise des Zylindersystems, gemäß dem klar wird, dass die vollständige physikalische Information über die Kolbenposition sich in der vektoriellen Antwort des Systems befindet, also sowohl in der Amplitude als auch in der Phase des gemessenen Signals. Diesem Umstand wird durch die Bestimmung von mindestens einem Streuparameter Rechnung getragen.

Vorzugsweise ist das Verfahren dadurch fortgebildet, dass der erste Port bezüglich einer Hubbewegung des Zylinderkolbens ortsfest angeordnet ist, vorzugsweise an einem Zylindermantel, in dem der Zylinderkolben aufgenommen ist, und die Zylinderkolbenposition in Bezug auf den ortsfest angeordneten ersten Port bestimmt wird.

Nach einer weiteren Modifikation des Verfahrens wird die Mehrtormessung des mindestens einen Transmissionsfaktors der Ports bei mindestens zwei voneinander verschiedenen Messfrequenzen oder Messfrequenzbereichen durchgeführt.

Es ist auch von Vorteil die Mehrtormessung des Transmissionsfaktors der Ports bei einer Messfrequenz vorzunehmen, bei der der Impedanzbeitrag der Ports oder andere Ankopplungselemente minimal oder vernachlässigbar ist.

Dies erlaubt eine genauere Positionsbestimmung des Zylinderkolbens, da die Störeffekte der Impedanz von Ankopplungselementen vermindert werden können. Vorzugsweise wird unter der vereinfachenden Annahme, dass nur TEM-Mode im Hohlraum zwischen Kolbenstange und Innenwand des Zylinderrohrs berücksichtigt werden, die Position des Zylinderkolbens auf Grundlage der nachfolgend dargestellten Beziehung bestimmt:

$$e^{i\omega\frac{2L}{c}} = p_3\left(\frac{p_2}{M-p_1}+1\right),$$

wobei $\omega$ die Winkelgeschwindigkeit, L die Länge der Kolbenstange im Hohlraum, c die Lichtgeschwindigkeit im Zylindermedium, $p_1$, $p_2$, $p_3$ via Simulation oder Kalibrierung bestimmbare Kalibrierparameter, und M ein an den Ports gemessenes Signal ist. M ist dabei vorzugsweise einer der Transmissionsfaktoren der Ports, bspw. $S_{21}$ oder $S_{12}$. Die Kalibrierparameter $p_1$, $p_2$, $p_3$ können über eine Simulation oder eine Kalibrierung bestimmt werden.

Die Erfindung betrifft zudem eine Baumaschine oder ein Hubgerät mit einer Vorrichtung einer der vorstehend beschriebenen Ausführungsformen.

Auch umfasst die Erfindung eine Baumaschine oder ein Hubgerät das Mittel aufweist, die dazu ausgelegt sind, eines der vorstehend beschriebenen erfindungsgemäßen Verfahren auszuführen.

Weitere Vorteile und Einzelheiten der Erfindung werden im Folgenden anhand der in der Zeichnung dargestellten Ausführungsbeispiele näher erläutert. Es zeigen:

Fig. 1: eine Prinzipdarstellung einer Kolben-Zylinder-Einheit,

Fig. 2: eine Teilschnittansicht einer erfindungsgemäßen Vorrichtung,

Fig. 3: ein Ersatzschaltbild zum Verständnis der erfindungsgemäßen Vorrichtung,

Fig. 4: eine Querschnittsansicht der erfindungsgemäßen Vorrichtung, das die kapazitive Ankopplung an die Kolbenstange darstellt, und

Fig. 5: eine teilweise freigelegte perspektivische Darstellung der erfindungsgemäßen Vorrichtung.

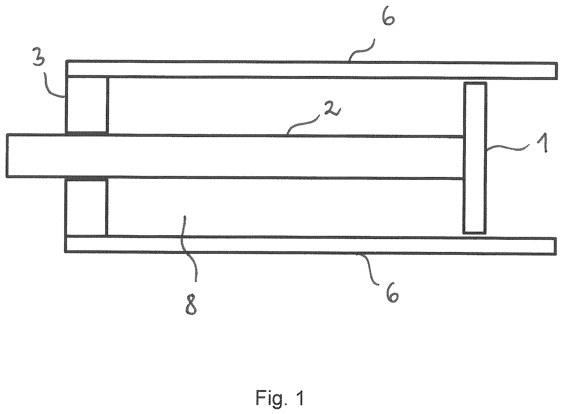

Fig. 1 ist eine schematische Darstellung eines in einem Zylinderrohr 6 aufgenommenen Zylinderkolbens 1. Der Zylinderkolben 1 ist dabei an einem Ende der Zylinderkolbenstange 2 befestigt und ist hin- und her bewegbar in dem Zylinderrohr 6 angeordnet. Die Kolbenstange 2 ist von einem Kolbenstangenlager 3 gehalten, das eine in Axialrichtung des Zylinderrohrs 6 erfolgende Bewegung zulässt. Der Zylinderkolben 1 ist typischerweise derart an die Innenumfangsfläche des Zylinderrohrs 6 angepasst, dass diese eine fluiddichte Verbindung ausbilden. Die in Fig. 1 dargestellte Lücke zwischen dem Zylinderkolben 1 und dem Innenumfang des Zylinderrohrs 6 ist der besseren Darstellbarkeit der einzelnen Bauteile geschuldet. Zudem erkennt man einen Hohlraum 8 zwischen der Kolbenstange 2 und dem Zylinderrohr 6. Dieser Hohlraum 8 kann zur Ausbreitung von elektromagnetischen Wellen verwendet werden, die bei einer entsprechenden Messung einen Rückschluss auf die Position des Kolbens 1 in dem Zylinderrohr 6 zulassen.

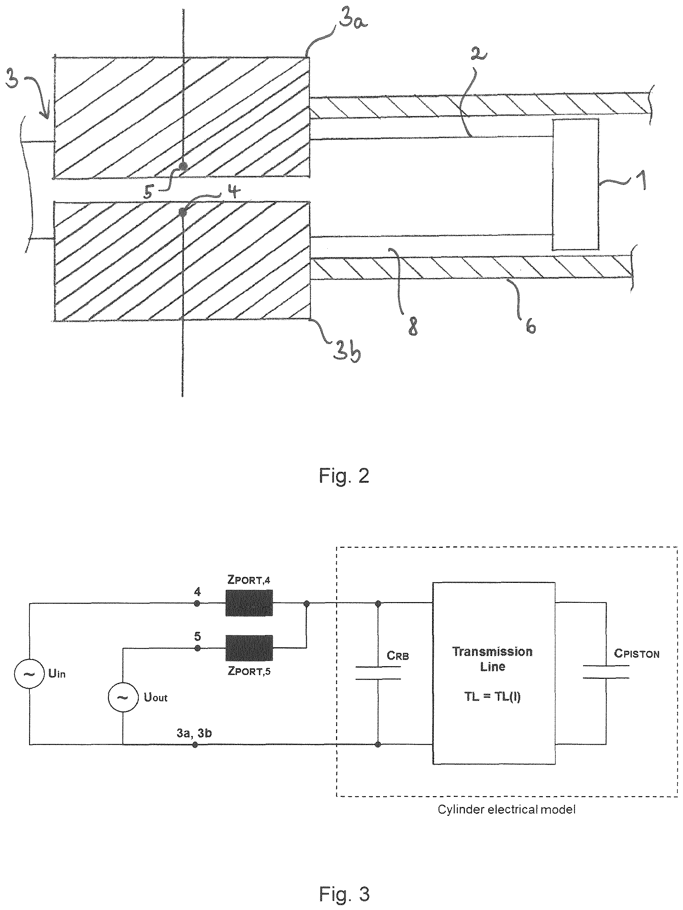

Fig. 2 zeigt die erfindungsgemäße Vorrichtung in einer Teilschnittansicht. Erneut erkennt man den in dem Zylinderrohr 6 angeordneten Zylinderkolben 1, die Zylinderkolbenstange und das zum Zylinderrohr 6 ortsfest angeordnete Kolbenstangenlager 3.

Das Kolbenstangenlager 3 umfasst in dieser Ausführungsform zwei nicht direkt miteinander in Berührung stehende Elemente 3a, 3b in oder an denen jeweils ein Port 4, 5 zur Übertragung eines elektrischen Signals vorgesehen ist. Der erste Port 4 und auch der zweite Port 5 sind dabei in unterschiedlichen Elementen 3a, 3b des Kolbenstangenlagers 3 angeordnet.

Der erste Port 4 bzw. der zweite Port 5 sind in der dargestellten Ausführungsform Ankopplungselemente, die dazu ausgelegt sind, ein elektrisches Signal kapazitiv, induktiv oder ohmsch auf das Kolbenstangenlager 2 zu übertragen bzw. zu empfangen.

Die beiden Elemente 3a, 3b des Kolbenstangenlagers 3 weisen dabei typischerweise eine rinnenförmige Ausnehmung auf, in der das Kolbenstangenlager 2 in seiner Längsachse verschiebbar gelagert ist. Das in Bezug auf die Kolbenstange 2 ortsfest angeordnete Kolbenstangenlager 3 mit seinen Ports 4, 5 wirkt demnach je nach Stellung der Kolbenstange 2 auf einen entsprechenden axialen Abschnitt der Kolbenstange 2. Dies führt auch dazu, dass die Ankopplung der elektrischen Signale durch die beiden Ports 4, 5 an unterschiedlichen in der Längsrichtung versetzten Stellen der Kolbenstange 2 stattfindet.

Fig. 3 ist ein Ersatzschaltbild der in Fig. 2 dargestellten erfindungsgemäßen Vorrichtung. Die beiden Ports 4, 5 bilden mit ihrem zugehörigen Element des Kolbenstangenlagers 3a bzw. 3b je ein Tor. Die beiden Ports 4, 5 weisen jeweils einen dem Port zugehörigen Impedanzwert $Z_{PORT}$ auf. Nach einer vorteilhaften Ausführungsform sind die beiden Ports baugleich und weisen daher auch einen identischen Impedanzwert $Z_{KON}$ auf. Die den beiden Impedanzwerten der Ports 4, 5 nachfolgende schaltungstechnisch realisierte Verbindung wird über die Kolbenstange 2 realisiert. Eine elektrische Verbindung der beiden Ports 4, 5 erfolgt also über die Kolbenstange 2. Darüber hinaus erkennt man auch noch das von einer gestrichelten Linie umgebene Ersatzschaltbild eines Hydraulikzylindermodells. Man erkennt die durch das Kolbenstangenlager gebildete Kapazität $C_{RB}$, die Kapazität des Kolbens $C_{PISTON}$ und die von der Position des Zylinderkolbens 1 abhängige Übertragungsleitung TL(I) des Zylinderhohlraums 8. Die Kapazitäten werden gebildet, da das Kolbenstangenlager 3 und das Zylinderrohr 6 in ihrer Position sehr nah an der Kolbenstange 2 bzw. den Zylinderkolben 1 angeordnet sind und dadurch eine Kapazität entsteht.

Die Übertragungsleitung TL(I) zwischen dem Kolbenstangenlager 3 und dem Zylinderkolben 1 kann durch einen Hohlleiter in Form des Hohlraums 8 ausgebildet sein.

Die Kapazitäten zwischen Kolbenstangenlager und Kolben sind dadurch begründet, da keine elektrisch leitende Verbindung zwischen Zylinderrohr 6 und Zylinderkolben 1 sowie zwischen Kolbenstangenlager 3 und Kolbenstange 2 vorhanden sind. Die einzige Ausnahme in der ein elektrisches Signal in die Kolbenstange 2 bzw. aus dieser heraus übertragen werden kann, stellen die beiden Ports 4, 5 dar. Die Ports 4, 5 sind dabei vorzugsweise von dem Kolbenstangenlager elektrisch isoliert.

Die nicht dargestellte Einheit zum Bestimmen der Position des Zylinderkolbens 1, ist dazu ausgelegt eine Mehrtormessung der Ports 4, 5 durchzuführen, um mindestens einen Transmissionsfaktor zu erfassen. Die fehlenden Pole zur Bildung des für eine Zweitormessung notwendigen Vierpols sind in Fig. 3 als Pole 3a, 3b bezeichnet und entsprechen den beiden rinnenförmigen Elementen des Kolbenstangenlagers 3. Man erkennt, dass diese ein gemeinsames Bezugsniveau darstellen, das durch Kontaktierung des Kolbenstangenlagers oder des damit in einer elektrisch leitenden Verbindung stehenden Zylinderrohrs 6 verwirklicht werden kann.

Die in Fig. 3 beispielhaft dargestellte Verschaltung zum Bestimmen des Transmissionsfaktors $S_{21}$ wird aufgrund der Tore mit den Kennzeichnungen 4, 3b und 5, 3a gewonnen. Die Impedanz hängt dabei von der Positionierung des Zylinderkolbens 1 bzw. dessen Stellung in dem Zylinderrohr 6 ab. Von daher ist es möglich die Positionsinformation des Zylinderkolbens 1 aus einer vektoriellen Messung von mindestens einem Transmissionsfaktor zu gewinnen.

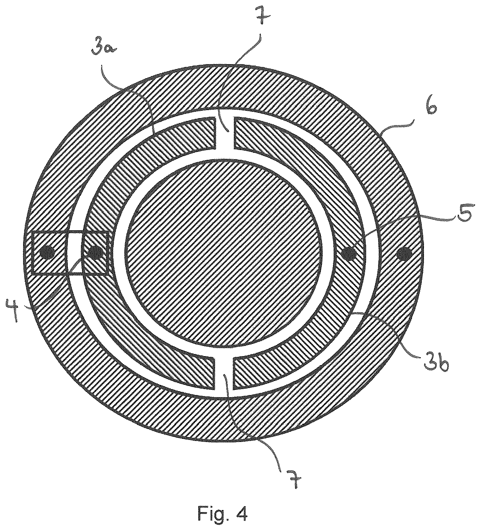

Fig. 4 zeigt eine Querschnittsansicht der erfindungsgemäßen Vorrichtung auf Höhe des Kolbenstangenlagers. In der Mitte verläuft das Kolbenstangenlager 2, das von zwei rinnenförmigen Elementen 3a, 3b teilweise umgeben ist. Die rinnenförmigen Elemente 3a, 3b führen zu einer Lagerung der Kolbenstange 2, berühren einander jedoch nicht. An den einander zugewandten Stirnseiten der beiden rinnenförmigen Elemente 3a, 3b ist ein Spalt 7 vorgesehen, der ein direktes Verbinden der beiden Elemente 3a, 3b verhindert. Darüber hinaus ist das Zylinderrohr 6 dargestellt, das sowohl die Kolbenstange 2 als auch das Kolbenstangenlager 3 umgibt. Jedes der rinnenförmigen Elemente 3a, 3b des Kolbenstangenlagers weist dabei einen Port 4, 5 auf, das ein elektrisches Signal auf bzw. von der Kolbenstange 2 übertragen kann. Die weiteren nicht mit einem Bezugszeichen versehenen Punkte stellen die weiteren Anschlüsse für eine Zweitormessung dar. Diese sind entsprechend dem Ersatzschaltbild nach Fig. 3 angeordnet und stellen die Pole 3 und 4 dar.

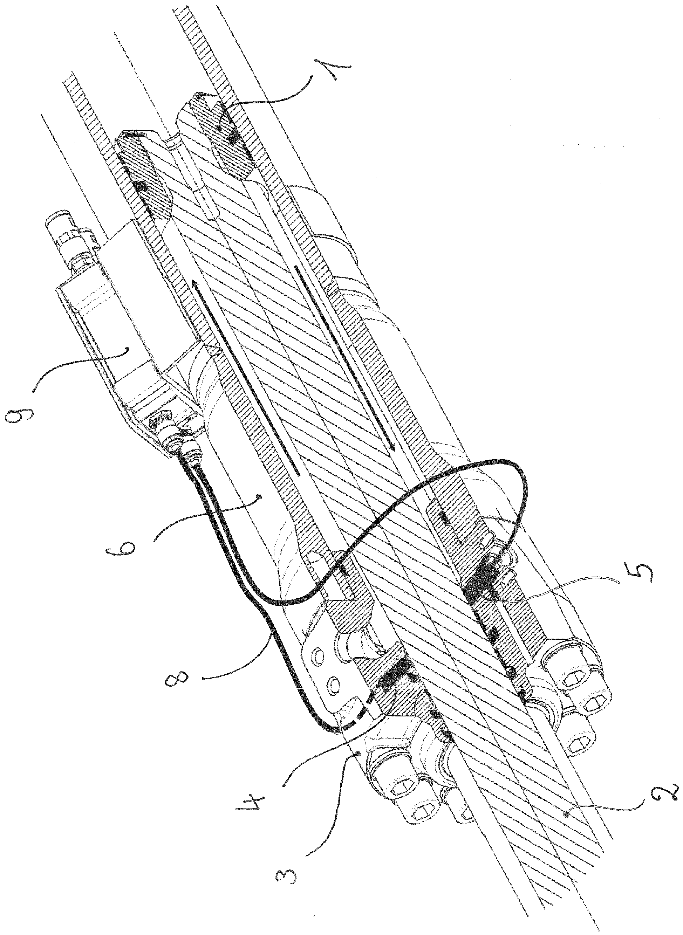

Fig. 5 ist eine perspektivische Darstellung der erfindungsgemäßen Vorrichtung in semitransparenter Optik zur besseren Darstellung der relevanten Vorgänge und Bauteile. Man erkennt die mittig verlaufende Kolbenstange 2, die in ihrer Axialrichtung bewegbar von dem Kolbenstangenlager 3 aufgenommen ist. Die Kolbenstange 2 kann also in das Zylinderrohr 6 ein- und ausgefahren werden. Es ist ebenfalls ein erster Port 4 und ein zweiter Port 5 sichtbar, der dazu ausgelegt ist, ein elektrisches Signal von bzw. zu einer Einheit 9 über ein Kabel 10 zu übertragen. Die Ports 4, 5 können ferner dazu ausgelegt sein, eine Signalübertragung auf die Kolbenstange 2 auszuführen bzw. ein Signal von der Kolbenstange abzugreifen. Dadurch wird zum Erstellen der elektromagnetischen Wellen in dem Hohlraum 8 zwischen Kolbenstange 2 und Zylinderrohr 6 beigetragen. Zur besseren Verständlichkeit sind die elektromagnetischen Wellen in dem Hohlraum 8 zwischen Zylinderrohr 6 und Kolbenstange 2 mit Pfeilen gekennzeichnet. Man sieht, dass vom ersten Port zum Einkoppeln der elektrischen Signale elektromagnetische Wellen in Richtung Kolben 1 laufen. Am Kolben werden diese reflektiert und bewegen sich dann in entgegengesetzter Richtung vom Kolben 1 weg und laufen auf das Kolbenstangenlager 3 zu. Dort ist auch der zweite Port 5 angeordnet, der an die ausbreitungsfähigen Mode der Welle angekoppelt ist.

Die Einheit 9 ist dadurch in der Lage mit Hilfe einer Mehrtormessung mindestens einen Transmissionsfaktor der Ports 4, 5 zu erfassen und auf Grundlage dieses mindestens einen erfassten Transmissionsfaktors die Position des Zylinderkolbens 1 zu bestimmen.

Dabei kann die Einheit zum Bestimmen der Position des Zylinderkolbens einen vektoriellen Netzwerkanalysator umfassen. In einer bevorzugten Ausführungsform bestehen die Tore bei einer Zweitormessung aus dem ersten Port 4 und dem Bezugsniveau des Kolbenstangenlagers bzw. des Zylinderrohrs sowie aus dem zweiten Port 5 und dem Bezugsniveau des Kolbenstangenlagers bzw. des Zylinderrohrs.

**Patentansprüche**

1.  Zylinder mit einem Zylinderrohr (6), einem Zylinderkolben (1) und einer Vorrichtung zur Positionsbestimmung des im Zylinderrohr (6) befindlichen Zylinderkolbens (1), umfassend:

    einen ersten Port (4),
    einen zweiten Port (5), wobei
    ein in das Innere des Zylinderrohrs (6) eingekoppeltes Signal mit dem Zylinderkolben (1) interagiert,
wobei eine Einheit (9) zum Bestimmen der Position des Zylinderkolbens (1) vorgesehen ist, die mit dem ersten und zweiten Port (4, 5) verbunden und dazu ausgelegt ist, die Position des Zylinderkolbens (1) in dem Zylinderrohr (6) zu bestimmen,
**dadurch gekennzeichnet, dass**
der ersten Port (4) zum Einkoppeln eines elektrischen Signals in das Innere des Zylinderrohrs (6) ausgebildet ist, der zweiten Port (5) zum Auskoppeln eines elektrischen Signals vom Inneren des Zylinderrohrs (6) ausgebildet ist, wobei die Einheit (9) zum Bestimmen der Position des Zylinderkolbens (1) dazu ausgelegt ist, mit Hilfe einer vektoriellen Messung eines aus dem Zylinderrohr (6) ausgekoppelten Signals die Position des Zylinderkolbens (1) in dem Zylinderrohr (6) zu bestimmen,
wobei die Einheit (9) zum Bestimmen der Position des Zylinderkolbens (1) dazu ausgelegt ist, mit Hilfe einer Mehrtormessung mindestens einen Transmissionsfaktor der Ports (4, 5) zu erfassen und auf Grundlage des mindestens einen erfassten Transmissionsfaktors die Zylinderkolbenposition zu bestimmen,
wobei jeder Port (4, 5) einen elektrischen Anschluss umfasst und einem Tor der Mehrtormessung entspricht, und
wobei der zweite zum Tor gehörende Anschluss eines Ports (4, 5) durch ein gemeinsames Massenniveau gebildet wird.

2.  Vorrichtung nach Anspruch 1, wobei
    in dem Zylinderrohr (6) eine Kolbenstange (2), die an einem ihrer Enden mit dem Zylinderkolben (1) in Verbindung steht, vorhanden ist, und
    ein Kolbenstangenlager (3), das an einem Abschnitt der Kolbenstange (2) angeordnet ist, vorgesehen ist.

3.  Vorrichtung nach Anspruch 2, wobei der erste Port (4) und der zweite Port (5) bezüglich einer Hubbewegung des Zylinderkolbens (1) und der Kolbenstange (2) ortsfest angeordnet sind, vorzugsweise an oder in dem Kolbenstangenlager (3).

4.  Vorrichtung nach einem der Ansprüche 2 oder 3, wobei der erste Port (4) und/oder der zweite Port (5) ein Ankopplungselement ist, das eine Übertragung eines elektrischen Signals auf die Kolbenstange (2) bzw. von der Kolbenstange (2) kapazitiv, induktiv und/oder ohmsch ermöglicht und vorzugsweise mindestens einen eine Elektrode umfassenden elektrischen Anschluss aufweist.

5.  Vorrichtung nach einem der vorhergehenden Ansprüche, wobei die Einheit (9) zum Bestimmen der Position des Zylinderkolbens (1) dazu ausgelegt ist, die Mehrtormessung der Ports (4, 5) zur Bestimmung des mindestens einen Transmissionsfaktors an mindestens zwei zueinander verschiedenen Messfrequenzen oder Messfrequenzbereichen durchzuführen, und vorzugsweise bei einer Messfrequenz vorgenommen wird, bei der der Impedanzbeitrag der Ports (4, 5) minimal oder vernachlässigbar ist.

6. Vorrichtung nach einem der Ansprüche 2 bis 5, wobei das Kolbenstangenlager (3) zwei rinnenförmige Elemente (3a, 3b) umfasst, die in ihrem Querschnitt jeweils die Grundform eines Halbrings aufweisen, und wobei vorzugsweise jeweils die konkav gewölbte Seiten des rinnenförmigen Elements (3a, 3b) der Kolbenstange (2) zugewandt ist.

7. Vorrichtung nach Anspruch 6, wobei die zwei rinnenförmigen Elemente (3a, 3b) in ihren konkaven Wölbungen die Kolbenstange (2) aufnehmen und zwischen den einander zugewandten Stirnseiten der zwei rinnenförmigen Elemente (3a, 3b) ein in Längsrichtung der Kolbenstange (2) verlaufender Spalt (7) vorhanden ist, so dass die beiden rinnenförmigen Elemente (3a, 3b) nicht miteinander in Berührung stehen.

8. Vorrichtung nach einem der Ansprüche 6 oder 7, wobei der erste Port (4) am oder in einem der zwei rinnenförmigen Elemente (3a) angeordnet ist und der andere Port (5) am oder in dem anderen der zwei rinnenförmigen Elemente (3b) angeordnet ist.

9. Vorrichtung nach einem der Ansprüche 2 bis 8, wobei die Einheit (9) zum Bestimmen der Position des Zylinderkolbens (1) dazu ausgelegt ist, unter der vereinfachenden Annahme, dass nur TEM-Mode im Hohlraum zwischen Kolbenstange (2) und Innenwand des Zylinderrohrs (6) berücksichtigt werden, die Position des Zylinderkolbens (1) mit Hilfe der Beziehung:

$$e^{i\omega\frac{2L}{c}} = p_3\left(\frac{p_2}{M-p_1} + 1\right) \text{ zu bestimmen,}$$

wobei

$\omega$ die Winkelgeschwindigkeit,
L die Länge der Kolbenstange (2),
c die Lichtgeschwindigkeit im Zylindermedium,
$p_1$, $p_2$, $p_3$ via Simulation oder Kalibrierung bestimmbare Kalibrierparameter, und
M ein an den Ports gemessenes Signal ist, vorzugsweise einer der Transmissionsfaktoren $S_{21}$ oder $S_{12}$.

10. Vorrichtung nach einem der vorhergehenden Ansprüche, wobei die Einheit (9) zum Bestimmen der Position des Zylinderkolbens (1) einen vektoriellen Netzwerkanalysator umfasst, um den mindestens einen Transmissionsfaktor zu bestimmen.

11. Verfahren zur Positionsbestimmung eines in einem Zylinderrohr (6) befindlichen Zylinderkolbens (1), wobei ein erster Port (4) und ein zweiter Port (5) vorhanden sind, und ferner eine Kolbenstange (2) in dem Zylinderrohr (6) vorhanden ist,
wobei in dem Verfahren über den ersten Port (4) ein Anregungssignal in das Innere des Zylinderrohrs eingekoppelt wird, das mit dem Zylinderkolben (1) interagiert zum Bestimmen der Zylinderkolbenposition in dem Zylinderrohr (6),
**dadurch gekennzeichnet, dass**
der jeweils eine erste und zweite Port (4, 5) zum Einkoppeln und Auskoppeln eines elektrischen Signals in das Innere des Zylinderrohrs (6) ausgebildet ist,
in dem Verfahren
über den zweiten Port (5) ein Empfangssignal aus dem Inneren des Zylinderrohrs ausgekoppelt wird, wobei das Empfangssignal vektoriell gemessen wird,
wobei eine Mehrtormessung zum Erhalt von mindestens einem der Transmissionsfaktoren $S_{21}$ oder $S_{12}$ der Ports (4, 5) durchgeführt wird, und
wobei der mindestens eine erfasste Transmissionsfaktor zum Bestimmen der Zylinderkolbenposition in dem Zylinderrohr (6) herangezogen wird.

12. Verfahren nach Anspruch 11, wobei die Messung des Ports oder die Mehrtormessung des mindestens einen Transmissionsfaktors der Ports (4, 5) bei mindestens zwei voneinander verschiedenen Messfrequenzen oder Messfrequenzbereichen durchgeführt wird, und vorzugsweise bei einer Messfrequenz vorgenommen wird, bei der der Impedanzbeitrag des Ports oder der Ports (4, 5) minimal oder vernachlässigbar ist.

13. Verfahren nach Anspruch 11 oder 12, wobei unter der vereinfachenden Annahme, dass nur TEM-Mode im Hohlraum zwischen Kolbenstange (2) und Innenwand des Zylinderrohrs (6) berücksichtigt werden, die Position des Zylinderkolbens (1) bestimmt wird auf Grundlage der Beziehung:

$$e^{i\omega\frac{2L}{c}} = p_3\left(\frac{p_2}{M-p_1} + 1\right),$$

wobei

$\omega$ die Winkelgeschwindigkeit,
L die Länge der Kolbenstange (2),

c die Lichtgeschwindigkeit im Zylindermedium,

$p_1, p_2, p_3$ via Simulation oder Kalibrierung bestimmbare Kalibrierparameter, und

M ein an den Ports gemessenes Signal ist, vorzugsweise einer der Transmissionsfaktoren $S_{21}$ oder $S_{12}$.

14. Mobile Arbeitsmaschine, insbesondere Baumaschine oder Hubgerät, mit einer Vorrichtung nach einem der Ansprüche 1 bis 9 und/oder mit einem Mittel, das dazu ausgelegt ist, das Verfahren nach einem der Ansprüche 11 bis 13 auszuführen.

**Claims**

1. Cylinder with a cylinder liner (6), a cylinder piston (1) and an apparatus for the position determination of the cylinder piston (1) located in the cylinder liner (6), comprising:

   a first port (4),
   a second port (5),
   wherein a signal coupled into the interior of the cylinder liner (6) interacts with the cylinder piston (1), wherein
   a unit (9) for determining the position of the cylinder piston (1) is provided, which is connected to the first and second port (4, 5) and which is configured to determine the position of the cylinder piston (1) in the cylinder liner (6),
   **characterized in that**
   the first port (4) is configured for coupling an electrical signal into the interior of the cylinder liner (6), the second port (5) is configured for coupling an electrical signal out of the interior of the cylinder liner (6), wherein the unit (9) for determining the position of the cylinder piston (1) is configured to determine the position of the cylinder piston (1) in the cylinder liner (6) with the aid of a vectorial measurement of a signal coupled out of the cylinder liner (6),
   wherein the unit (9) for determining the position of the cylinder piston (1) is configured to detect at least one transmission factor of the ports (4, 5) with the aid of a multi-gate measurement and to determine the cylinder piston position on the basis of the at least one detected transmission factor,
   wherein each port (4, 5) comprises am electrical connector and corresponds to one gate of the multi-gate measurement, and
   wherein the second connector of a port (4, 5) belonging to the gate is formed by a common mass level.

2. Apparatus in accordance with claim 1, wherein a piston rod (2), which is connected at one of its ends to the cylinder piston (1), is present in the cylinder liner (6), and
   a piston rod bearing (3) is provided which is arranged at a section of the piston rod (2).

3. Apparatus in accordance with claim 2, wherein the first port (4) and the second port (5) are arranged in a fixed position with respect to a stroke movement of the cylinder piston (1) and of the piston rod (2), preferably at or in the piston rod bearing (3).

4. Apparatus in accordance with one of claims 2 or 3, wherein the first port (4) and/or the second port (5) is/are a coupling element which allows a transmission of an electrical signal to the piston rod (2) or from the piston rod (2) in a capacitive, inductive and/or ohmic manner, and preferably comprises at least one electrical connector comprising an electrode.

5. Apparatus in accordance with one of the preceding claims, wherein the unit (9) for determining the position of the cylinder piston (1) is configured to carry out the measurement of the one port or the multi-gate measurement of the ports (4, 5) for the determination of the at least one transmission factor at at least two mutually different measurement frequencies or measurement frequency ranges and is preferably carried out at a measurement frequency at which the impedance contribution of the port or ports (4, 5) is minimal or negligible.

6. Apparatus in accordance with one of claims 2 to 5, wherein the piston rod bearing (3) comprises two channel-shaped elements (3a, 3b) which each have the basic shape of a half-ring in their cross-sections; and wherein the respective concavely arched sides of the channel-shaped element (3a, 3b) preferably faces the piston rod (2).

7. Apparatus in accordance with claim 6, wherein the two channel-shaped elements (3a, 3b) receive the piston rod (2) in their concave arches, and a gap (7) which extends in the longitudinal direction of the piston rod (2) is present between the mutually facing end faces of the two channel-shaped elements (3a, 3b) so that the two channel-shaped elements (3a, 3b) do not contact one another.

8. Apparatus in accordance with one of the claims 6 or 7, wherein the first port (4) is arranged at or in one of the two channel-shaped elements (3a) and the other port (5) is arranged at or in the other one of the two channel-shaped elements (3b).

9. Apparatus in accordance with one claims 2 to 8, wherein the unit (9) for determining the position of the cylinder piston (1) is configured to determine the position of the cylinder piston (1) with help of the relationship:

$$e^{i\omega\frac{2L}{c}} = p_3\left(\frac{p_2}{M-p_1} + 1\right)$$

under the simplifying assumption that only TEM modes are considered in the hollow space between the piston rod (2) and the inner wall of the cylinder liner (6), where
$\omega$ is the angular speed;
L is the length of the piston rod (2);
c is the speed of light in the cylinder medium;
$p_1$, $p_2$, $p_3$ are calibration parameters which can be determined via simulation or calibration; and
M is a signal measured at the ports, preferably one of the transmission factors $S_{21}$ or $S_{12}$ of the scattering parameters.

10. Apparatus in accordance with one of the preceding claims, wherein the unit (9) for determining the position of the cylinder piston (1) comprises a vectorial network analyzer to determine the at least one transmission factor.

11. Method for the position determination of a cylinder piston (1) located in a cylinder liner (6), wherein a first port (4) and a second port (5) are provided, and furthermore a piston rod (2) is present in the cylinder liner (6),
wherein, in the method, an excitation signal is coupled into the interior of the cylinder liner via the first port (4) and interacts with the cylinder piston to determine the cylinder piston position in the cylinder liner (6),
**characterized in that**
the first and second port (4, 5) are configured for coupling and decoupling an electrical signal into and out of the interior of the cylinder liner (6),
in the method, via the second port (5), a reception signal is decoupled from the interior of the cylinder liner, wherein the reception signal is measured vectorially
wherein a multi-gate measurement is carried out to obtain at least one of the transmission factors $S_{21}$ and $S_{12}$ of the ports (4, 5), and
wherein the at least one detected transmission factor is used for determining the cylinder piston position in the cylinder liner (6).

12. Method in accordance with claim 11, wherein the measurement of the port or the multi-gate measurement of the at least one transmission factor of the ports (4, 5) is carried out at at least two mutually different measurement frequencies or measurement frequency ranges and is preferably performed at a measurement frequency at which the impedance contribution of the port or ports (4, 5) is minimal or negligible.

13. Method in accordance with claim 11 or 12, wherein the position of the cylinder piston (1) is determined, under the simplifying assumption that only TEM modes are considered in the hollow space between the piston rod (2) and the inner wall of the cylinder liner (6), on the basis of the relationship

$$e^{i\omega\frac{2L}{c}} = p_3\left(\frac{p_2}{M-p_1} + 1\right),$$

where

$\omega$ is the angular speed;
L is the length of the piston rod (2);
c is the speed of light in the cylinder medium;
$p_1$, $p_2$, $p_3$ are calibration parameters which can be determined via simulation or calibration; and
M is a signal measured at the ports, preferably one of the transmission factors $S_{21}$ or $S_{12}$ of the scattering parameters.

14. Mobile work machine, in particular a construction machine or a hoisting unit, having an apparatus in accordance with one of the claims 1 to 9; and/or having a means which is configured to carry out the method in accordance with one of the claims 11 to 13.

**Revendications**

1. Cylindre avec un tube de cylindre (6), un piston de cylindre (1) et un dispositif servant à définir une position du piston de cylindre (1) se trouvant dans le tube de cylindre (6), comprenant :

un premier port (4),
un deuxième porte (5),
dans lequel un signal injecté dans l'intérieur du tube de cylindre (6) interagit avec le piston de cylindre (1),
dans lequel est prévue une unité (9) servant à définir la position du piston de cylindre (1), qui est reliée au premier et au deuxième port (4, 5) et qui est configurée pour définir la position du piston de cylindre (1) dans le tube de cylindre (6),
**caractérisé en ce que**
le premier port (4) est réalisé pour injecter un signal électrique dans l'intérieur du tube de cylindre (6), le deuxième port (5) est réalisé pour découpler un signal électrique de l'intérieur du tube de cylindre (6), dans lequel l'unité (9) est configurée pour définir la position du piston de cylindre (1) afin de définir à l'aide d'une mesure vectorielle d'un signal découplé du tube de cylindre (6) la position du piston de cylindre (1) dans le tube de cylindre (6),

dans lequel l'unité (9) est configurée pour définir la position du piston de cylindre (1) afin de détecter à l'aide d'une mesure multiport au moins un facteur de transmission des ports (4, 5) et afin de définir sur la base de l'au moins un facteur de transmission détecté la position de piston de cylindre,

dans lequel chaque port (4, 5) comprend une borne électrique et correspond à un port de la mesure multiport, et

dans lequel la deuxième borne, appartenant au port, d'un port (4, 5) est formée par un niveau de masse commun.

2. Dispositif selon la revendication 1, dans lequel une tige de piston (2), qui est reliée au niveau d'une de ses extrémités au piston de cylindre (1), est présente dans le tube de cylindre (6), et

un palier de tige de piston (3), qui est disposé au niveau d'un tronçon de la tige de piston (2), est prévu.

3. Dispositif selon la revendication 2, dans lequel le premier port (4) et le deuxième port (5) sont disposés de manière stationnaire par rapport à un déplacement de levage du piston de cylindre (1) et de la tige de piston (2), de préférence au niveau de ou dans le palier de tige de piston (3).

4. Dispositif selon l'une quelconque des revendications 2 ou 3, dans lequel le premier port (4) et/ou le deuxième port (5) sont un élément d'accouplement, qui permet de manière capacitive, inductive et/ou ohmique une transmission d'un signal électrique sur la tige de piston (2) ou depuis la tige de piston (2) et présente de préférence au moins une borne électrique comprenant une électrode.

5. Dispositif selon l'une quelconque des revendications précédentes, dans lequel l'unité (9) est configurée pour définir la position du piston de cylindre (1) afin de mettre en œuvre la mesure multiport des ports (4, 5) pour définir l'au moins un facteur de transmission au niveau d'au moins deux fréquences de mesure ou plages de fréquences de mesure différentes l'une par rapport à l'autre, et de préférence à une fréquence de mesure, à laquelle la valeur d'impédance des ports (4, 5) est minime ou négligeable.

6. Dispositif selon l'une quelconque des revendications 2 à 5, dans lequel le palier de tige de piston (3) comprend deux éléments en forme de sillon (3a, 3b), qui présentent dans leur section transversale respectivement la forme de base d'un demi-cercle, et dans lequel de préférence respectivement les côtés bombés de manière concave de l'élément en forme de sillon (3a, 3b) sont tournés vers la tige de piston (2).

7. Dispositif selon la revendication 6, dans lequel les deux éléments en forme de sillon (3a, 3b) reçoivent dans leurs bombements concaves la tige de piston (2) et une fente (7) s'étendant dans le sens longitudinal de la tige de piston (2) est présente entre les côtés frontaux tournés les uns vers les autres des deux éléments en forme de sillon (3a, 3b) de sorte que les deux éléments en forme de sillon (3a, 3b) ne sont pas en contact l'un avec l'autre.

8. Dispositif selon l'une quelconque des revendications 6 ou 7, dans lequel le premier port (4) est disposé au niveau d'un ou dans un des deux éléments en forme de sillon (3a) et l'autre port (5) est disposé au niveau du ou dans l'autre des deux éléments en forme de sillon (3b).

9. Dispositif selon l'une quelconque des revendications 2 à 8, dans lequel l'unité (9) est configurée pour définir la position du piston de cylindre (1), en supposant par simplification que seuls des modes TEM sont pris en compte dans la cavité entre la tige de piston (2) et la paroi intérieure du tube de cylindre (6), pour définir la position du piston de cylindre (1) à l'aide de la relation :

$$e^{i\omega\frac{2L}{c}} = p_3\left(\frac{p_2}{M-p_1} + 1\right)$$

dans lequel

ω est la vitesse angulaire,
L est la longueur de la tige de piston (2),
c est la vitesse de la lumière dans le milieu de cylindre,
p1, p2, p3 sont des paramètres d'étalonnage pouvant être définis par simulation ou étalonnage, et
M est un signal mesuré au niveau des ports, de préférence d'un des facteurs de transmission $S_{21}$ ou $S_{12}$.

10. Dispositif selon l'une quelconque des revendications précédentes, dans lequel l'unité (9) comprend pour définir la position du piston de cylindre (1) un analyseur de réseau vectoriel pour définir l'au moins un facteur de transmission.

11. Procédé servant à définir la position d'un piston de cylindre (1) se trouvant dans un tube de cylindre (6), dans lequel un premier port (4) et un deuxième port (5) sont présents,

et en outre une tige de piston (2) est présente dans le tube de cylindre (6), dans lequel est injecté, dans le procédé, dans l'intérieur du tube de cylindre par l'intermédiaire du premier port (4) un signal d'excitation, qui interagit avec le piston de cylindre (1) pour définir la position de piston de cylindre dans le tube de cylindre (6),

**caractérisé en ce que**

le respectivement un premier et deuxième port (4, 5) sont réalisés pour injecter et découpler un signal électrique dans l'intérieur du tube de cylindre (6), un signal de réception est découplé, dans le procédé, de l'intérieur du tube de cylindre par l'intermédiaire du deuxième port (5), dans lequel le signal de réception est mesuré de manière vectorielle, dans lequel une mesure multiport est mise en œuvre pour obtenir au moins un des facteurs de transmission $S_{21}$ ou $S_{12}$ des ports (4, 5), et dans lequel l'au moins un facteur de transmission détecté est pris en compte pour définir la position de piston de cylindre dans le tube de cylindre (6).

12. Procédé selon la revendication 11, dans lequel la mesure du port ou la mesure multiport de l'au moins un facteur de transmission des ports (4, 5) est mise en œuvre à au moins deux fréquences de mesure ou plages de fréquences de mesure différentes l'une de l'autre, et de préférence est réalisée à une fréquence de mesure, à laquelle la valeur d'impédance du port ou des ports (4, 5) est minime ou négligeable.

13. Procédé selon la revendication 11 ou 12, dans lequel en supposant par simplification que seuls des modes TEM sont pris en compte dans la cavité entre la tige de piston (2) et la paroi intérieure du tube de cylindre (6), la position du piston de cylindre (1) est définie sur la base de la relation :

$$ e^{i\omega\frac{2L}{c}} = p_3 \left( \frac{p_2}{M - p_1} + 1 \right) $$

dans lequel

$\omega$ est la vitesse angulaire,
L est la longueur de la tige de piston (2),
c est la vitesse de la lumière dans le milieu de cylindre,
p1, p2, p3 sont des paramètres d'étalonnage pouvant être définis par simulation ou étalonnage, et
M est un signal mesuré au niveau des ports, de préférence d'un des facteurs de transmission $S_{21}$ ou $S_{12}$.

14. Machine de travail mobile, en particulier machine de construction ou engin de levage, avec un dispositif selon l'une quelconque des revendications 1 à 9 et/ou avec un moyen, qui est configuré afin d'exécuter le procédé selon l'une quelconque des revendications 11 à 13.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005029494 A1
- DE 19537877 A1
- DE 102011088381 A1
- DE 102008061227
- DE 102013018808
- DE 102008064259
- DE 102009055363